# EUROPEAN PATENT APPLICATION

(11) **EP 4 502 463 A1**
(43) Date of publication of application: **05.02.2025**
(21) Application number: 24184176.6
(22) Date of filing: 25.06.2024
(51) Int. Cl.: F21V 17/16, F21V 23/00

(54) **LUMINAIRE FUNCTION MODULE MOUNTING BUCKLE ASSEMBLY, LUMINAIRE WITH SAME, AND ASSEMBLING METHOD**

(30) Priority: 29.06.2023 CN 202310782168
(71) Applicant: Kosnic Lighting Limited, Newbury Berkshire RG14 5PX (GB); Suzhou Cyantronic Technology Co. Ltd., Suzhou Jiangsu (CN)
(72) Inventor: KUANG, Wen Tao, Berkshire, RG14 5PX (GB); LI, Rui, Suzhou, Jiangsu (CN)
(74) Representative: Bryers Intellectual Property Ltd

(57) **Abstract**

A luminaire function module mounting buckle assembly comprises a luminaire function module (1) having a housing, and a mounting plate (2) for installing the luminaire function module (1). One of the mounting plate (2) and the housing of the luminaire function module (1) is provided with at least one buckle (21) that defines at least one hole (211), and the other is provided with at least one buckle groove (11) comprising a groove wall having at least one protrusion (113). Each buckle (21) is insertable into a buckle groove (11) until a protrusion (113) snap-fit engages a hole (211), to install the luminaire function module on the mounting plate. A luminaire comprising the luminaire function module mounting buckle assembly. A luminaire assembly method using the luminaire function module mounting buckle assembly.

## Description

### Field of the Invention

The invention relates to the field of luminaires, and in particular to a buckle assembly for mounting a function module of a luminaire, a luminaire with the same, and an assembly method.

### Background of the Invention

At present, electronic function modules such as control modules and emergency modules used in luminaires on the market are mostly fixed with screws or other additional fixing accessories, which makes it difficult to achieve modular assembly of products and increases the inconvenience of installation, labour cost and the bill of materials (BOM) cost.

The disclosure of the above background technology content is only used to assist in understanding the inventive concepts and technical solutions of the present invention. It does not necessarily belong to the prior art for this patent application, nor does it necessarily provide technical guidance; in the absence of clear evidence that the above background technology content has been publicly disclosed before the filing or priority date of this patent application, it should not be used to evaluate the novelty and inventiveness of the present invention.

### Summary of the Invention

An object of the present invention is to provide a buckle assembly for mounting a function module of a luminaire to a mounting plate that does not require any additional fastening accessories to complete the connection between a housing of the functional module and the mounting plate.

To achieve the above object, the present invention adopts a technical solution as follows:
A luminaire function module mounting buckle assembly comprises a luminaire function module and a mounting plate, for installing the luminaire function module.

The mounting plate is equipped with a buckle that can be folded upward relative to a mounting surface. The buckle itself is not elastic. In an example, the buckle is a sheet-like structure that is integrally formed with the mounting plate. In another example, the buckle is attached to the mounting plate.

The luminaire function module has a housing that is equipped with a buckle groove that matches the buckle, for receiving the buckle. The buckle groove is equipped with a vertical channel.

The buckle is provided with a hole, and a groove wall of the buckle groove is provided with a protrusion that matches the hole, for fitting within the hole; or, the groove wall of the buckle groove is provided with a hole, and the buckle is provided with a protrusion that matches the hole, for fitting within the hole.

The function module of the luminaire is configured to be installed on the mounting plate simply by inserting the buckle into the buckle groove until a snap-fit connection is formed therebetween (by means of a protrusion snap-fitting in a hole).

In an example, the luminaire function module includes an emergency module, a sensing module, a driving module and/or an electronic controller of the luminaire.

In an example, the buckle groove includes a first groove wall and a second groove wall arranged oppositely, wherein the second groove wall is provided with a notch extending in the direction in which the buckle is inserted into the buckle groove (the "insertion direction of the buckle").

In an example, the second groove wall is provided with the protrusion, and the protrusion has an upward direction in the insertion direction of the buckle. The protrusion has a guide slope that approaches the first groove wall in the insertion direction of the buckle.

In an example, the second groove wall is partially provided with a structure of reduced thickness.

In an example, the number of holes on each buckle and the number of protrusions on the groove wall of each buckle groove channel is multiple and corresponds one-to-one; or, the number of holes on the groove wall of each buckle groove channel and the number of protrusions on each buckle are multiple and are in one-to-one correspondence.

The protrusion is configured to meet the hole when the luminaire function module meets the mounting surface of the mounting plate.

In an example, the mounting plate is provided with an opening corresponding to the buckle, and the opening includes a receiving portion and an extending portion, wherein the receiving portion is configured to accommodate the buckle.

The present invention also provides a luminaire, the luminaire including a light source and the luminaire function module mounting buckle assembly as described above.

In an example, the luminaire is a tri-proof (waterproof, dustproof, corrosion-proof) luminaire, which comprises a first (base) housing part and a second (illumination) housing part that are snap-fit connectable together, in which the mounting plate is arranged on the first (base) housing part, the mounting plate is provided with a plurality of luminaire function modules, and the luminaire function modules comprise an electronic controller, a drive module, an emergency module and a sensing module.

In an example, the luminaire is a bracket luminaire, which comprises a first (upper) luminaire body and a second (lower) luminaire body that are snap-connectable together, in which the mounting plate is a part of the second (lower) luminaire body. The mounting plate is provided with a plurality of luminaire function modules, and the luminaire function modules comprise an electronic controller, a drive module, an emergency module and a sensor module.

In an example, the luminaire is a ceiling luminaire which comprises a first (base) housing part and a second (illumination) housing part, the first (base) housing part and the second (illumination) housing part connectable together, and the mounting plate is provided on the second (illumination) housing part. The luminaire function module is an electronic controller. The present invention further provides a luminaire assembly method using the luminaire function module mounting buckle assembly as described above.

In an example, the luminaire assembly method includes the following steps:
Fold the buckle on the mounting plate upward relative to the surface of the mounting plate on which the luminaire function module is to be installed;
Move the luminaire function module downward from a position opposite the mounting plate, so that the buckle passes into the buckle groove on the luminaire function module until an engaging relationship between a protrusion and a hole forms;
Assemble the buckle connection with the light source, a first base side housing part and a second illumination side housing part of the luminaire, the first base side housing part and the second illumination side housing part of the luminaire connectable together, to obtain the assembled luminaire.

The beneficial effects brought by the technical solution provided by the present invention are as follows:
The housing of the luminaire function module and the buckle turned up on the mounting plate engage with each other to provide a buckle connection structure, that serves to perform installation and fixation.
The operation of the buckle assembly is convenient and quick, and there is no need for additional attachments for fastening, thereby improving assembly efficiency and reducing costs.

According to a first aspect, there is provided a luminaire function module mounting buckle assembly, comprising: a luminaire function module having a housing, and a mounting plate, for installing the luminaire function module; in which: one of the mounting plate and the housing of the luminaire function module is provided with at least one buckle that defines at least one hole, and the other of the mounting plate and the housing of the luminaire function module is provided with at least one buckle groove comprising a groove wall having at least one protrusion; in which each buckle is insertable into a buckle groove in an insertion direction, until a protrusion snap-fit engages a hole, to install the luminaire function module on the mounting plate.

Thus, there may be at least one snap-fit engageable protrusion-and-hole pair for installing the luminaire function module on the mounting plate in which the protrusion is provided by the mounting plate and the hole is provided by the luminaire function module and/or in which the protrusion is provided by the luminaire function module and the hole is provided by the mounting plate.

The luminaire function module may be, or comprise at least one of,: an emergency module, a sensing module, a driving module, an electronic controller of the luminaire.

In a specific example of the luminaire function module mounting buckle assembly, the mounting plate is provided with the at least one buckle, the mounting plate has a mounting surface, the or each buckle has a sheet-like structure, the or each buckle is formed integrally with the mounting plate and is foldable upwards relative to the mounting surface, and the or each buckle itself is not elastic. The mounting plate may be provided with an opening for each buckle, the opening comprising a receiving portion and an extension portion, the receiving portion configured to receive an unfolded buckle and the extension portion usable to perform a folding operation on the buckle.

In a specific example of the luminaire function module mounting buckle assembly, the housing of the luminaire function module is provided with the at least one buckle groove comprising a groove wall having at least one protrusion, and the or each buckle groove comprises a vertical channel for receiving a respective buckle therein into a snap-fitted condition.

In a specific example of the luminaire function module mounting buckle assembly, the or each buckle groove includes a first groove wall and a second groove wall arranged oppositely, and the second groove wall is provided with a notch extending along the insertion direction. The second groove wall may be provided with the at least one protrusion, and the protrusion may have a guide slope approaching the first groove wall in the insertion direction. The second groove wall may be partially provided with a thinned structure.

In a specific example of the luminaire function module mounting buckle assembly, the or each buckle defines a plural number of holes, and the corresponding buckle groove comprises a groove wall having a corresponding plural number of protrusions.

In other examples, the or at least one buckle comprises a single hole and a corresponding buckle groove comprises a groove wall having a corresponding single protrusion; alternatively, the or at least one buckle comprises a single protrusion and a corresponding buckle groove comprises a groove wall having a corresponding single hole. In other examples, the or at least one buckle comprises a first number of holes and a corresponding buckle groove comprises a groove wall having a second, different number of protrusions; or, alternatively, the or at least one buckle comprises a first number of protrusions and a corresponding buckle groove comprises a groove wall having a second, different number of holes.

In an example of the luminaire function module mounting buckle assembly, the or each protrusion is configured to engage a respective hole when the luminaire function module meets the mounting surface of the mounting plate.

According to a second aspect there is provided a luminaire, the luminaire comprising a light source and further comprising the luminaire function module mounting buckle assembly of the first aspect.

In a specific example, the luminaire is a tri-proof luminaire comprising a first housing part and a second housing part that are snap-connectable together, and the first housing part is a base part of the luminaire; the mounting plate is arranged on the first housing part, the mounting plate is provided with the luminaire function module, and the luminaire function module comprises at least one of an electronic controller, a drive module, an emergency module and a sensing module.

In another example, the first and second housing parts may be connectable in a way other than by a snap-fit and may be releasably connectable.

In a specific example, the luminaire is a bracket luminaire comprising a first, upper luminaire body and a second, lower luminaire body that are snap-connectable together, and the mounting plate is a part of the second, lower luminaire body, the mounting plate is provided with the luminaire function module, and the luminaire function module comprises at least one of an electronic controller, a drive module, an emergency module, and a sensing module.

In another example, the first, upper and second, lower luminaire bodies may be connectable in a way other than by a snap-fit and may be releasably connectable.

In a specific example, the luminaire is a bracket luminaire comprising a first base part and a second illumination part, the mounting plate is arranged on the first base part, the mounting plate is provided with the luminaire function module, and the luminaire function module is an electronic controller.

A luminaire according to the second aspect may comprise a plurality of luminaire function module mounting buckle assemblies according to the first aspect. The luminaire function module mounting buckle assemblies of the plurality may have features in common and/or that differ.

According to a third aspect there is provided a luminaire assembly method using the luminaire function module mounting buckle assembly of the first aspect, comprising the steps of:
(i) folding the or each buckle of the mounting plate, from an unfolded position, upward relative to the mounting surface of the mounting plate, on which the luminaire function module is to be installed;
(ii) moving the luminaire function module downward, from a position above the mounting plate, so that the or each buckle enters, in the insertion direction, into a buckle groove of the housing of the luminaire function module until a snap-fit engagement between a protrusion and hole pair is formed, to install the luminaire function module on the mounting plate, and
(iii) assembling the buckled luminaire function module and mounting plate with a light source, a first, base side luminaire part and a second, illumination side luminaire of the luminaire, the first, base side luminaire part and the second, illumination side luminaire of the luminaire connectable together, to obtain the assembled luminaire.

A luminaire assembly method of the third aspect is usable to obtain a luminaire function according to the second aspect.

### Brief Description of the Accompanying Drawings

In order to more clearly explain embodiments of the present application or the technical solutions in the prior art, drawings are used in the following description and these drawings will be briefly introduced below. The drawings used in the following description are for only some embodiments of the present invention recorded in this application. For those of ordinary skill in the art, other drawings can be obtained based on these drawings without exerting creative efforts.
**Figure 1** is a schematic diagram of buckles on a mounting plate, not turned up, according to a first exemplary embodiment of the present invention;
**Figure 2** is a schematic diagram of the buckles on the mounting plate, turned up, and a luminaire function module, provided by the first exemplary embodiment of the present invention, before the buckle assembly is completed;
**Figure 3** is a schematic diagram of the mounting plate and the luminaire function module, provided by the first exemplary embodiment of the present invention, after the buckle assembly is completed;
**Figure 4** is a partially enlarged schematic diagram of the engagement between a buckle on the mounting plate and the buckle groove on the luminaire function module, provided by the first exemplary embodiment of the present invention;
**Figure 5** is a schematic diagram of buckles on a mounting plate, not turned up, according to a second exemplary embodiment of the present invention;
**Figure 6** is a schematic diagram of buckles on a mounting plate, turned up, and a luminaire function module, provided by the second exemplary embodiment of the present invention, before the buckle assembly is completed;
**Figure 7** is a schematic diagram of the buckle assembly applied to a tri-proof luminaire, in which the luminaire function module and the mounting plate are in a separated state;
**Figure 8** is a schematic diagram of the buckle assembly applied to a tri-proof luminaire in which the luminaire function module and the mounting plate are in an assembled state;
**Figure 9** is a schematic diagram of the buckle assembly applied to a bracket luminaire, in which the luminaire function module and the mounting plate are in a separated state;
**Figure 10** is a schematic diagram of the buckle assembly applied to a bracket luminaire in which the luminaire function module and the mounting plate are in an assembled state;
**Figure 11** is a schematic diagram of the buckle assembly applied to a ceiling luminaire, in which the luminaire function module and the mounting plate are in a separated state; and
**Figure 12** is a schematic diagram of the buckle assembly applied to a ceiling luminaire, in which the luminaire function module and the mounting plate are in an assembled state.

The reference signs include:
1 - Luminaire function module,
11 - Buckle groove,
111 - First groove wall,
112 - Second groove wall,
113 - Protrusion,
114 - Notch,
2 - Mounting plate,
21 - Buckle
211 - Hole,
22 - Opening,
3 - First (base) housing part,
4 - Second (illumination) housing part,
5 - First (upper) luminaire body,
6 - Second (lower) luminaire body,
7 - First (base) part,
8 - Second (illumination) part.

### Detailed Description

In order to enable those skilled in the art to better understand the solutions of the present invention, the technical solutions in the embodiments of the present invention recorded in this application will be clearly and completely described below in conjunction with the accompanying drawings. Obviously, the described embodiments are only some embodiments of the present invention, rather than all possible embodiments. Based on the embodiments of the present invention, all other embodiments obtained by those of ordinary skill in the art without creative efforts should be considered to fall within the scope of protection of the present invention.

It should be noted that the terms "first", "second", etc. in the description and claims of the present invention and the above-mentioned drawings are used to distinguish similar objects and are not necessarily used to describe a specific order or sequence. It is to be understood that the terms so used are interchangeable under appropriate circumstances such that the embodiments of the present invention described herein can be practiced in sequences other than those illustrated or described herein. In addition, the terms "including" and "having" and any variations thereof, are intended to cover non-exclusive inclusions, for example, a process, method, apparatus, product or equipment that includes a series of steps or units need not be limited to those explicitly listed. Those steps or units may instead include other steps or units not expressly listed or inherent to the processes, methods, products or devices.

A luminaire function module mounting buckle assembly comprises a luminaire function module having a housing, and a mounting plate for installing the luminaire function module. One of the mounting plate and the housing of the luminaire function module is provided with at least one buckle that defines at least one hole, and the other is provided with at least one buckle groove comprising a groove wall having at least one protrusion. Each buckle is insertable into a buckle groove channel until a protrusion forms a snap-fit engagement with a hole, to install the luminaire function module on the mounting plate. A luminaire comprising the luminaire function module mounting buckle assembly. A luminaire assembly method in which the luminaire function module mounting buckle assembly is used.

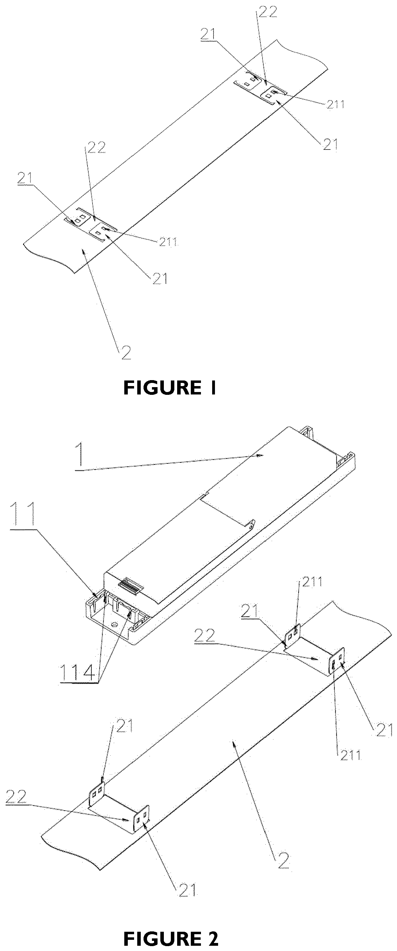

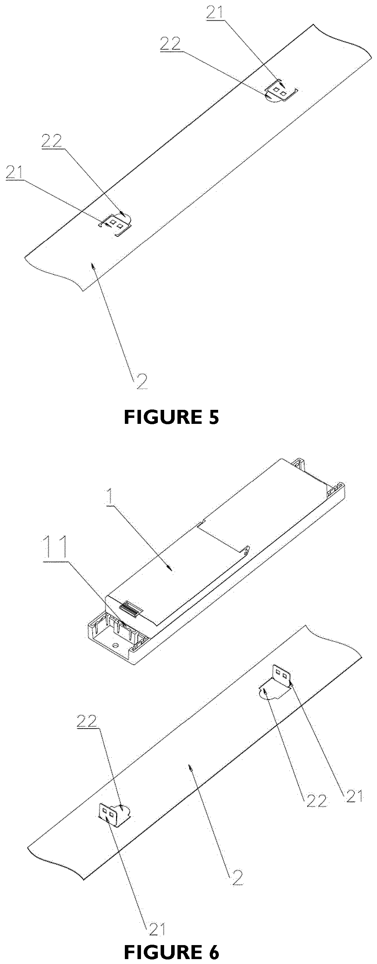

In one embodiment of the present invention, a luminaire function module mounting buckle assembly is provided, including a luminaire function module 1 and a mounting plate 2 for installing the luminaire function module 1, see **Figures 2** **and** **6****,** wherein, the luminaire function module 1 includes an emergency module, a sensing module, a driving module and/or an electronic controller of the luminaire.

Continuing to refer to **Figures 2** **and** **6****,** and comparing with **Figures 1** **and** **5,** the mounting plate 2 is equipped with at least two buckles 21 that can be folded upward relative to its mounting surface. Each buckle 21 has a sheet-like structure and is integrally formed with the mounting plate 2.

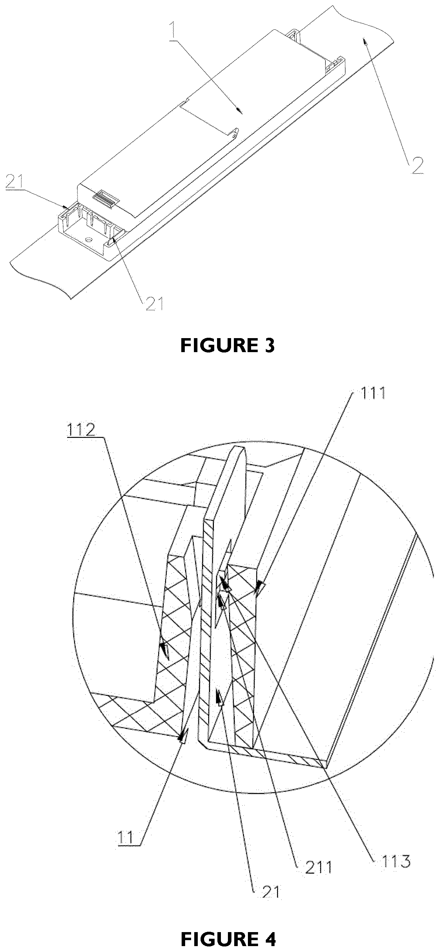

The mounting plate 2 is formed in one piece, and the buckle 21 itself is not elastic; as shown in **Figures 1** **and** **4****,** the mounting plate 2 is provided with an opening 22 corresponding to the buckle 21, and the opening 22 includes a receiving portion and an extension portion, the receiving portion configured to accommodate the unfolded buckle 21 and the extension portion usable to perform a folding operation on the buckle 21. For example, fingers or a tool can pass through the extension portion and apply force to the buckle 21 to unfold it.

Referring to **Figures 2****,** **4** **and** **6****,** the housing of the luminaire function module 1 is equipped with a buckle groove 11 that matches the buckle 21, and the buckle groove 11 is equipped with a vertical channel.

In this embodiment, the buckle 21 is provided with a hole 211, and a groove wall of the buckle groove 11 is provided with a protrusion 113 that is configured to snap into the hole 211, as shown in **Figures 3 and 4****.**

As mentioned above, the present invention is not limited to buckle having hole and the buckle groove having a protrusion that is configured to snap-fit into the hole, to form a buckle connection between them. In other embodiments of the invention, the buckle groove 1 has a groove wall that is provided with a hole, and the buckle 21 is provided with a protrusion that is configured to snap-fit into the hole, so that a buckle connection between them can be formed.

The luminaire function module 1 can be installed on the mounting plate 2 only by inserting the buckle 21 into the buckle groove channel 11 until a snap-fit connection between them is formed, as shown in **Figure 3****.**

As shown in **Figure 4****,** each buckle groove 11 includes a first groove wall 111 and a second groove wall 112 that is arranged oppositely, and the second groove wall 112 is provided with the protrusion 113; as shown in **Figure 2****,** the second groove wall 112 is provided with a notch 114 extending along the insertion direction of the buckle 21, so that when the buckle 21 is inserted into the buckle groove 11 and the hole 211 on the buckle 21 meets the protrusion 113, the second groove wall 112 can be elastically deformed relatively easily. Moreover, the protrusion 113 has a guide slope approaching the first groove wall 111 in the insertion direction of the buckle 21, so that the protrusion 113 can slide into the hole 211 more easily.

The number of holes 211 on each buckle 21 and the number of protrusions 113 on the groove wall of each buckle groove channel 11 are multiple and correspond one to one, see **Figures 2** **and** **6****.** There are two holes 211 on each buckle 21, and two protrusions 113 are provided on the groove wall of each buckle groove 11; otherwise, the technical solution of the present invention can be realized by two holes being provided in the groove wall of each buckle groove 11 and each buckle 21 being provided with two protrusions. The protrusion and hole are configured to engage when the luminaire function module 1 and the mounting surface of the mounting plate 2 are in contact with each other. Then, the luminaire function module 1 and the mounting plate 2 cannot move relatively up and down or left and right.

In **Figures 2** **and** **6****,** the buckles used to fix the luminaire function module 1 on the mounting plate 2 are arranged at two ends. The differences between **Figures 2** **and** **6** include: in **Figure 2****,** each end is provided with two opposite buckles 211, while there is one buckle 21 at each end in **Figure 6****.** Obviously, there are more than two specific ways to arrange the buckles, for example, two opposite buckles 21 as shown in **Figure 2** can be provided on one side, and on the other side a single buckle 21 can be provided as shown in **Figure 6****.** If the luminaire function module 1 is large in size or weight, three buckles 21 can be provided at each end; or even more buckles 21 can be provided.

As shown in **Figure 3****,** the second groove wall 112 is partially provided with a thinned structure, which allows the luminaire function module 1 and the mounting plate 2 to be assembled even when the buckle 21 is inserted into the buckle groove 11. After the buckle assembly is completed, there is still room for releasing the buckle: using fingers or a tool, it is possible to apply force to the thinned part to move the second groove wall 112 away from the first groove wall 111 so that the buckle 21 disengages from the buckle groove 11 to allow the luminaire function module 1 to be separated from the mounting plate 2.

The luminaire function module mounting buckle assembly of the embodiment of the present invention can be applied to many different types of luminaires, such as using, for example, one or more of emergency modules, sensing modules, drive modules, and electronic controllers. The buckle assembly is assembled within a luminaire with a light source. The following uses three different types of luminaires as examples.

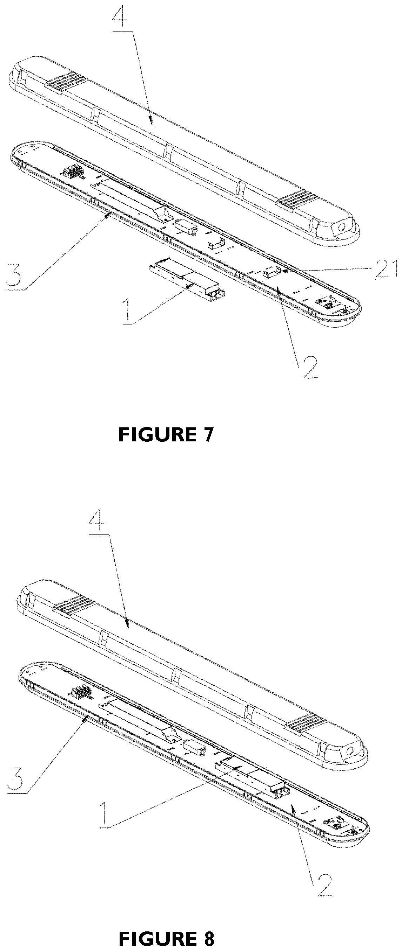

**Figures 7 and 8** are schematic diagrams of an example application of a tri-proof luminaire, which includes a first (base) housing part 3 and a second (illumination) housing part 4 that are snap-connected together. The mounting plate 2 can be a light panel of the luminaire, the light panel arranged on the first (base) housing part 3. The mounting plate 2 is provided with a plurality of luminaire function modules 1. The luminaire function modules 1 include an electronic controller, a driving module, an emergency module and a sensing (induction) module.

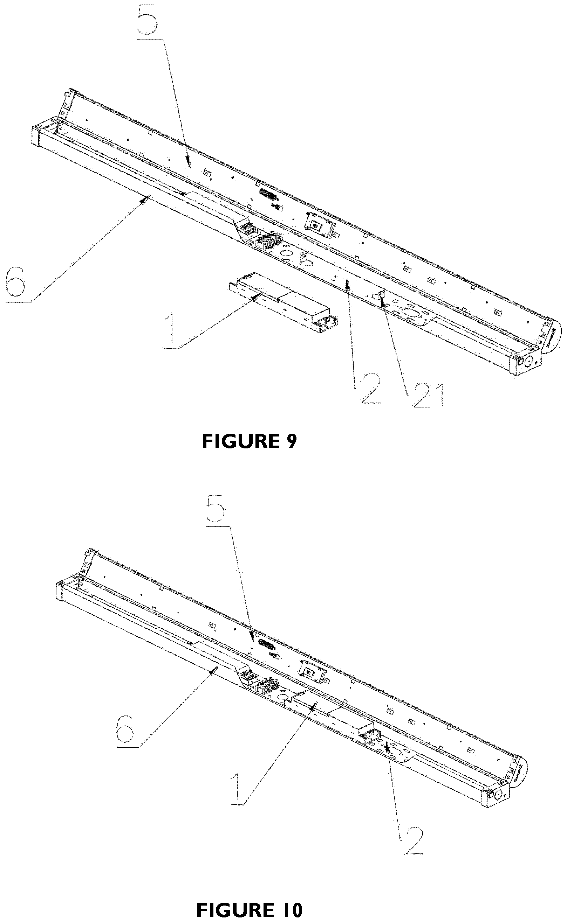

**Figures 9 and 10** are schematic diagrams of an example application of a bracket luminaire, which includes a first (upper) lamp body 5 and a second (lower) lamp body 6 that are snap-fitted together. The mounting plate 2 can be the light panel of the luminaire, with the light panel being the bottom surface of the second (lower) lamp body 6. The mounting plate 2 is provided with a plurality of luminaire function modules 1. The luminaire function modules 1 include an electronic controller, a drive module, an emergency module and a sensing (induction) module.

The differences between the tri-proof luminaire of **Figure 7** and the bracket luminaire of **Figure 9** include: the mounting plate 2 (i.e. the light panel) in the tri-proof light is in the middle of the overall luminaire, while the mounting plate 2 (i.e. the light panel) in the bracket luminaire is at the bottom of the luminaire; that is, the mounting plate serves as a support plate for the bottom of the luminaire.

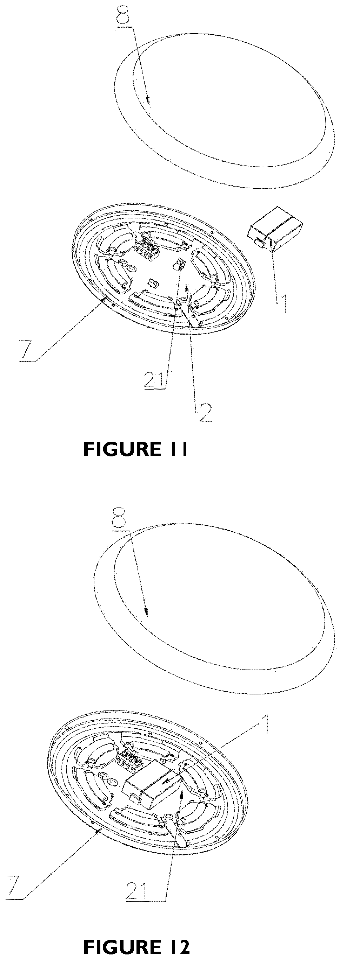

**Figures 11 and 12** are schematic diagrams of an example application of a ceiling luminaire, which comprises a first (base) part 7 and a second (illumination) part 8. The mounting plate 2 can be a light panel of the luminaire, the light panel arranged on the first (base) part 7. The luminaire function module 1 of the buckle assembly is an electronic controller. The present invention does not rule out that the ceiling luminaire has a square or other shape (the shape of the shown ceiling luminaire is circular), nor does it rule out that the area of the ceiling luminaire is sufficient to accommodate other modules than the electronic controller, which can also be installed on the mounting plate 2 of the ceiling luminaire using buckle assembly componentry of the present invention.

Alternatively or additionally to a light panel of the luminaire, other surfaces of the luminaire can also be used as the mounting plate 2 .

An assembly method of a luminaire using the buckle assembly components includes the following steps:
Fold the buckle on the mounting plate upward relative to the surface of the mounting plate on which the luminaire function module is to be installed;
Move the luminaire function module downward from a position opposite the mounting plate, so that the buckle enters the buckle groove on the luminaire function module until an engaging relationship between a protrusion and hole pair forms;
Assemble the buckled components with the light source, first (base) luminaire part and second (illumination) luminaire part of the luminaire.

The invention discloses a luminaire function module installation buckle assembly, a luminaire with the same and a luminaire assembly method. The buckle assembly comprises a luminaire function module and a mounting plate used for installing the luminaire function module.

In a specific example, one of the mounting plate and the housing of the luminaire function module is provided with at least two buckles defining holes therein and the other of the mounting plate and the housing of the luminaire function module is provided with a buckle groove with protrusions for snap-fitting into the holes of the buckles when the buckles are inserted into the buckle groove. The buckle assembly is configured so that the luminaire function module is engaged with the mounting plate simply through the buckles being inserted into the buckle groove. The luminaire function module can therefore be fastened very simply and quickly without requiring the use of any additional fixing means. The buckle assembly therefore provides convenience and cost improvements in the assembly of a luminaire.

It should be noted that in this disclosure, relational terms such as first and second are only used to distinguish one entity or operation from another entity or operation, and do not necessarily require or imply that these entities or operations are mutually exclusive, or any such actual relationship or order exists between them. Furthermore, the term "includes" "comprises" or any other variations thereof are intended to cover a non-exclusive inclusion such that a process, method, article, or apparatus that includes a list of elements includes not only those elements, but also those not expressly listed other elements, or elements inherent to the process, method, article or equipment. Without further limitation, an element defined by the statement "comprises a..." does not exclude the presence of additional identical elements in a process, method, article, or apparatus that includes the stated element. The above are only specific embodiments of the present application. It should be noted that for those of ordinary skill in the art, several improvements and modifications can be made without departing from the principles of the present application and that such improvements and modifications should be regarded as falling within the scope of protection of the invention of this application.

## Claims

1. A luminaire function module mounting buckle assembly, comprising:
a luminaire function module (1) having a housing, and
a mounting plate (2), for installing the luminaire function module (1); in which:
one of the mounting plate (2) and the housing of the luminaire function module (1) is provided with at least one buckle (21) that defines at least one hole (211), and
the other of the mounting plate (2) and the housing of the luminaire function module (1) is provided with at least one buckle groove (11) comprising a groove wall having at least one protrusion (113);
in which each buckle (21) is insertable into a buckle groove (11) in an insertion direction, until a protrusion snap-fit engages a hole, to install the luminaire function module on the mounting plate (2).

2. The luminaire function module mounting buckle assembly of claim 1, in which:
the mounting plate (2) is provided with the at least one buckle (21),
the mounting plate (2) has a mounting surface,
the or each buckle (21) has a sheet-like structure,
the or each buckle (21) is formed integrally with the mounting plate (21) and is foldable upwards relative to the mounting surface, and
the or each buckle (21) itself is not elastic.

3. The luminaire function module installation buckle assembly of claim 2, wherein:
the mounting plate (2) is provided with an opening (22) for each buckle (21), the opening (22) comprising a receiving portion and an extension portion, the receiving portion configured to receive an unfolded buckle (21) and the extension portion usable to perform a folding operation on the buckle (21).

4. The luminaire function module mounting buckle assembly of any one of claims 1 to 3, in which:
the housing of the luminaire function module (1) is provided with the at least one buckle groove (11) comprising a groove wall having at least one protrusion (113), and
the or each buckle groove (11) comprises a vertical channel for receiving a respective buckle (12) therein into a snap-fitted condition.

5. The luminaire function module mounting buckle assembly of any one of claims 1 to 4, wherein the or each buckle groove (11) includes a first groove wall (111) and a second groove wall (112) arranged oppositely, and the second groove wall (112) is provided with a notch (114) extending along the insertion direction.

6. The luminaire function module installation buckle assembly of claim 5, wherein the second groove wall (112) is provided with the at least one protrusion (113), and the protrusion (113) has a guide slope approaching the first groove wall (111) in the insertion direction.

7. The luminaire function module mounting buckle assembly of claim 5 or claim 6, wherein the second groove wall (112) is partially provided with a thinned structure.

8. The luminaire function module installation buckle assembly of any one of claims 1 to 7, wherein:
the or each buckle (21) defines a plural number of holes (211), and
the corresponding buckle groove (11) comprises a groove wall having a corresponding plural number of protrusions (113).

9. The luminaire function module installation buckle assembly of any one of claims 1 to 8, wherein the or each protrusion (113) is configured to engage a respective hole (211) when the luminaire function module (1) meets the mounting surface of the mounting plate (2).

10. The luminaire function module mounting buckle assembly of any one of claims 1 to 9, wherein the luminaire function module (1) is or comprises at least one of: an emergency module, a sensing module, a driving module, an electronic controller of the luminaire.

11. A luminaire, the luminaire comprising a light source and further comprising the luminaire function module mounting buckle assembly of any one of claims 1 to 10.

12. The luminaire of claim 11, wherein:
the luminaire is a tri-proof luminaire comprising a first housing part (3) and a second housing part (4) that are snap-connectable together, and the first housing part is a base part of the luminaire;
the mounting plate (2) is arranged on the first housing part (3),
the mounting plate (2) is provided with the luminaire function module (1), and
the luminaire function module (1) comprises at least one of an electronic controller, a drive module, an emergency module and a sensing module.

13. The luminaire of claim 11, wherein:
the luminaire is a bracket luminaire comprising a first, upper luminaire body (5) and a second, lower luminaire body (6) that are snap-connectable together, and
the mounting plate (2) is a part of the second, lower luminaire body (6),
the mounting plate (2) is provided with the luminaire function module (1), and
the luminaire function module (1) comprises at least one of an electronic controller, a drive module, an emergency module and a sensing module.

14. The luminaire of claim 11, wherein:
the luminaire is a ceiling luminaire comprising a first base part (7) and a second illumination part (8),
the mounting plate (2) is arranged on the first base part (7),
the mounting plate (2) is provided with the luminaire function module (1), and
the luminaire function module (1) is an electronic controller.

15. A luminaire assembly method using the luminaire function module mounting buckle assembly of any one of claims 1 to 9 comprising the steps of:
(i) folding the or each buckle (21) of the mounting plate (2), from an unfolded position, upward relative to the mounting surface of the mounting plate (2), on which the luminaire function module (1) is to be installed;
(ii) moving the luminaire function module (1) downward, from a position above the mounting plate (2), so that the or each buckle (21) enters, in the insertion direction, into a buckle groove (11) of the housing of the luminaire function module (1) until a snap-fit engagement between a protrusion (113) and hole (211) pair is formed, to install the luminaire function module (1) on the mounting plate (2), and
(iii) assembling the buckled luminaire function module (1) and mounting plate (2) with a light source, a first, base side luminaire part and a second, illumination side luminaire of the luminaire, the first, base side luminaire part and the second, illumination side luminaire of the luminaire connectable together, to obtain the assembled luminaire.
